# EUROPEAN PATENT SPECIFICATION

(11) **EP 4 282 640 B1**
(45) Date of publication and mention of the grant of the patent: **12.06.2024**
(21) Application number: 22174911.2
(22) Date of filing: 23.05.2022
(51) Int. Cl.: B32B 1/00, B32B 3/12, B32B 5/18, B32B 7/02, B32B 27/06, B32B 27/32, B32B 27/36, B32B 27/34, B29D 24/00, B29D 99/00

(54) **THERMOPLASTIC HONEYCOMB WITH MULTI-LAYER CELL WALLS, THEIR PRODUCTION PROCESS AND EQUIPMENT TO PRODUCE**
THERMOPLASTISCHE WABEN MIT MEHRSCHICHTIGEN ZELLWÄNDEN, VERFAHREN ZU IHRER HERSTELLUNG UND AUSRÜSTUNG ZUR HERSTELLUNG
NID D'ABEILLE THERMOPLASTIQUE À PAROIS CELLULAIRES MULTICOUCHES, LEUR PROCÉDÉ DE PRODUCTION ET ÉQUIPEMENT NÉCESSAIRE À LEUR PRODUCTION

(43) Date of publication of application: 29.11.2023
(73) Proprietor: EconCore N.V., 3001 Leuven (BE)
(72) Inventor: PFLUG, Jochen, 65207 Wiesbaden (DE)
(74) Representative: Kirkpatrick

(56) References cited:
- EP-A1- 3 297 817
- EP-A1- 3 928 974
- EP-B1- 3 297 817
- CN-A- 110 154 490
- CN-A- 110 228 220

## Description

The present invention relates to cellular structures such as folded honeycomb structures. In particular, the present invention concerns an improved thermoplastic folded honeycomb structure.

### Technical Background

Folded honeycombs known from WO 97/03816 are produced continuously from a single layer, e.g. a flat body. Hexagonal cells are constructed by folding after the introduction of cuts. The cells are bridged by covering-layer connecting surfaces. Folded honeycombs without cuts can be produced economically from one continuous layer of thermoplastic film by rotational vacuum thermoforming. Such folded honeycombs that are described in WO2006/053407 have connecting surfaces covering every second hexagonal cell. Further honeycombs are described in WO2019/158743 which is incorporated herein in its entirety and WO2006/053407 which is incorporated herein in its entirety.

Honeycomb cell walls with a three-layer structure are known from US2022/0001643, whereby the three layers are a support layer with two adhesive layers, one adhesive layer being provided on one side of the support layer.

CN 110 154 490 A (CHN Energy Invest Group CO LTD; NAT INST Clean & Low Carbon Energy) 23 August 2019 relates to material forming, in particular to a thermoplastic core material with a multi-layer composite structure and equipment including the core material.

CN 110 228 220 A (CHN Energy Invest Group CO LTD; NAT INST Clean & Low Carbon Energy) 13 September 2019 relates to material forming, in particular to a production method and production equipment of a thermoplastic composite core material.

EP 3 297 817 A1 (Econcore NV [BE]) 28 March 2018 relates to a hierarchical sandwich core (20) is described in the form of a honeycomb, i.e. having repetitive and periodic lattice materials. The sandwich core (20) can be made up of a macroscopic honeycomb structure with sandwich cell walls having a mesoscopic cellular core. The longitudinal axis of cells of the mesoscopic honeycomb cell can be perpendicular to the longitudinal axis of the cells of the macroscopic honeycomb structure.

### Summary of the invention

The present invention concerns improved thermoplastic honeycomb cores composed of sheet material as defined in the claims 1 to 12.

An object of the invention is to be able to provide a honeycomb such as a folded honeycomb with improved cell walls composed of sheet material.

An object of the invention is to be able to provide a honeycomb such as a folded honeycomb with a stronger cell wall geometry.

Embodiments of the present invention provide a honeycomb core, formed from a plurality of polygonal cells arranged in an array, wherein: each polygonal cell has lateral cell walls, each polygonal cell being bounded on two sides by covering-layer planes, the lateral cell walls of each polygonal cell forming a polygonal ring, the lateral cell walls being composed of a sheet material, the sheet material being a symmetric three-layer or five-layer thermoplastic co-extruded sheet material having a central (or core) layer or inner layers and outer layers. The symmetric three-layer or five-layer thermoplastic co-extruded sheet material provides improved mechanical properties compared to a simple sheet material. An aspect of the present invention is the use of three-layer or five-layer sandwich cell walls when the central (or core) layer or inner layers is/are made from a lower density material than the material for the outer layers. Accordingly, it is preferred if the central (or core) layer or the inner layers have a significantly lower density then the outer layers. The central (or core) layer or the inner layers preferably has/have a lower density than the outer layers, e.g. the central (or core) layer or the inner layers can have a density of 30% to 90%, preferably, 50-70% of the density of the outer layers. This provides a good strength/weight ratio.

A yield strength of the outer layers is preferably larger than the yield strength of the central (or core) layer or inner layers. This provides improved mechanical properties.

The central (or core) layer or inner layers can be made by physical foaming or chemical foaming or by being composed of low density components. The low density components can comprise hollow glass particles.

A polymer density of the outer layers is preferably in the range of 0.9 to 1.5 or 0.9 to 2 kg/dm³. Increasing polymer density provides improved mechanical properties. For example, the central (or core) layer or inner layers can have a density of 1.1 kg/dm³ when the outer layers have density of 1.6 kg/dm³. Also, the outer layers can have a density of 1 kg/dm³ then the central (or core) layer or inner layers has/have a density of equal to or less than 0.9 kg/dm³.

The thickness of the three-layer or five-layer co-extruded cell wall is preferably less than or equal to 1 mm, and at least 0.1 mm. The central (or core) layer or inner layers of the co-extruded cell walls have a thickness of preferably equal to or more than 1/3 or preferably equal to or more than 1/2, most preferably 67% to 90%, of the total cell wall thickness. The central (or core) layer can preferably be in the range of 50 to 67% of the overall thickness of the symmetric three layer (ABA) coextruded sheet material. Each outer layer 6 can preferably be in the range of 25% to 16.5% of the overall thickness of the symmetric three layer (ABA) coextruded sheet material.

The outer layers are preferably flat and smooth without an out-of-plane unevenness, compared to the ideal plane of a cell wall, wherein the unevenness of the outer layers is smaller than the thickness of the outer layers. Micro CT or laser-profile sensors can be used to measure the out-of-plane unevenness, compared to the ideal plane of the cell wall.

The symmetric three-layer or five-layer thermoplastic co-extruded sheet materials can be selected from a thermoplastic polymer and/or a thermoplastic elastomeric polymer, or a thermoplastic polymer selected from a group consisting of polyolefins, in particular polyethylene or polypropylene, polyesters, in particular polyethylene terephthalate, polytrimethylene terephthalate, polybutylene terephthalate or polyetylene- 1,2-furandicaboxylate, polyamides, in particular polyamide 6 or polyamide 6,6, polycarbonates, polyetherketones, polyetheretherketones, polyetherketoneketones polyethers, polyetheresters, polyphenylene sulfides, polyetherimides, copolymers and mixtures thereof with or without filler, reinforcements and/or air or gas inclusions.

The inner core of the symmetric three-layer or five-layer thermoplastic co-extruded sheet materials can be a foam, such as a mechanical foam or a chemical foam.

The central (or core) layer or inner layers and the outer layers are preferably composed from the same thermoplastic polymer.

A folded honeycomb core comprising a sheet material is provided, for example
a) by direct co-extrusion of a symmetric multilayer sheet material and transfer for rotational vacuum-thermoforming followed by folding, or
b) by reheating of a co-extruded or laminated multilayer sheet material and transfer for rotational vacuum-forming or sequential compression moulding followed by folding.

The sheet material can be wound on a drum after direct co-extrusion or after reheating followed by unwinding from the drum for transfer for folding.

The folded honeycomb core can be made by a method including forming a plurality of polygonal cells arranged in an array, wherein: each polygonal cell has lateral cell walls, each polygonal cell being bounded on two sides by covering-layer planes, the lateral cell walls of each polygonal cell forming a polygonal ring, the lateral cell walls being composed of a sheet material, the sheet material being a symmetric three-layer or five-layer thermoplastic co-extruded sheet material.

The symmetric three-layer or five-layer thermoplastic co-extruded sheet material provides improved mechanical properties compared to a simple sheet material.

The folded honeycomb core can be made by the method also including use of three-layer or five-layer sandwich cell walls when the central (or core) layer or inner layers is/are made from a lower density material than the material for the outer layers. Accordingly, it is preferred if the central (or core) layer or the inner layers has/have a significantly lower density then the outer layers. The central (or core) layer or inner layers preferably has/have a lower density than the outer layers, e.g. the central (or core) layer inner layers can have a density of 30% to 90%, preferably, 50-70% of the density of the outer layer. This provides a good strength/weight ratio.

The central (or core) layer can be made by physical foaming or chemical foaming or by being composed of low density components. The low density components can comprise hollow glass particles.

The outer layers are preferably made flat and smooth without an out-of-plane unevenness, compared to the ideal plane of a cell wall, wherein the unevenness of the outer layers is smaller than the thickness of the outer layers. Micro CT or laser-profile sensors can be used to measure the out-of-plane unevenness, compared to the ideal plane of the cell wall.

For the method, the symmetric three-layer or five-layer thermoplastic co-extruded sheet materials can be selected from a thermoplastic polymer and/or a thermoplastic elastomeric polymer, or a thermoplastic polymer selected from a group consisting of polyolefins, in particular polyethylene or polypropylene, polyesters, in particular polyethylene terephthalate, polytrimethylene terephthalate, polybutylene terephthalate or polyetylene-1,2-furandicaboxylate, polyamides, in particular polyamide 6 or polyamide 6,6, polycarbonates, polyetherketones, polyetheretherketones, polyetherketoneketones polyethers, polyetheresters, polyphenylene sulfides, polyetherimides, copolymers and mixtures thereof with or without filler, reinforcements and/or air or gas inclusions.

The inner core of the symmetric three-layer or five-layer thermoplastic co-extruded sheet materials can be a foam, such as a mechanical foam or a chemical foam.

The central (or core) layer or the inner layers and the outer layers are preferably composed of the same thermoplastic polymer.

The folded honeycomb core can be made with provide equipment for producing a folded honeycomb core from a sheet material comprising:
a) means for direct co-extrusion of a symmetric multilayer sheet material and transfer for rotational vacuum-thermoforming followed by folding, or
b) means for reheating of a co-extruded or laminated multilayer sheet material and transfer for rotational vacuum-forming or sequential compression moulding followed by folding.

The equipment can include means for forming a plurality of polygonal cells arranged in an array, wherein: each polygonal cell has lateral cell walls, each polygonal cell being bounded on two sides by covering-layer planes, the lateral cell walls of each polygonal cell forming a polygonal ring, the lateral cell walls being composed of a sheet material, the sheet material being a symmetric three-layer or five-layer thermoplastic co-extruded sheet material.

Further embodiments are disclosed in the detailed description of the invention as well as in dependent claims.

### Brief description of the drawings

Figure 1 shows an overview of a method and equipment.
Figure 2 shows a single cell from a honeycomb core which includes sheet material in accordance with embodiments of the present invention and Figure 3 shows a detail of Figure 2.
Figures 4 and 5 show cross sections through symmetric three-layer (ABA) coextruded sheet materials 6, 8, 6 according to embodiments of the present invention.
Figure 6 shows equipment for folding a honeycomb core of the present invention.
Figure 7 shows a symmetric three-layer material in accordance with embodiments of the present invention where one side is showing unevenness.

### Detailed description of the illustrative embodiments

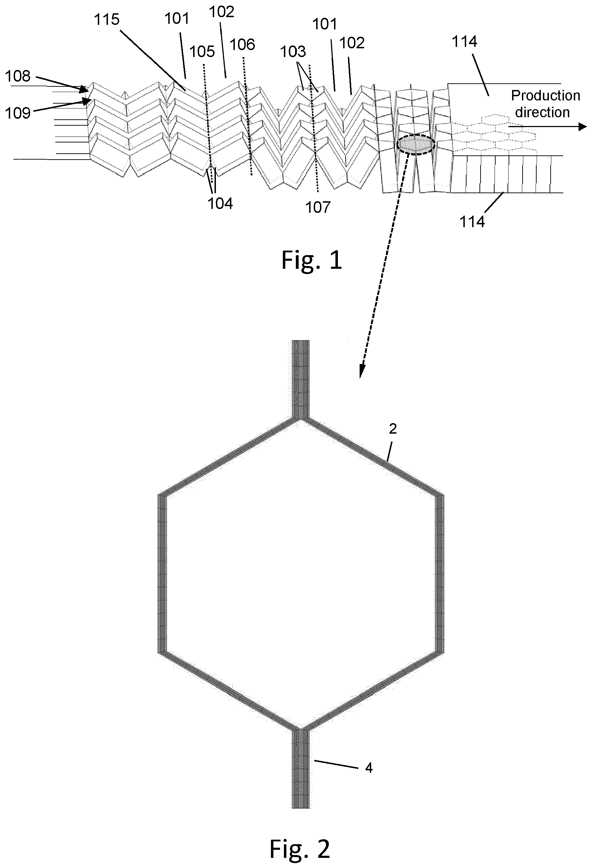

Figure 1 shows an overview of the honeycomb core of the present invention as made by a method and equipment. Figure 2 shows a single cell from a honeycomb core according to Figure 1.

Honeycomb cores in accordance with embodiments of the present invention and can include sheet materials such as, for example, a symmetric multilayer, such as a symmetric three-layer (layers ABA) sheet material or a symmetric five-layer sheet (layers CABAC) material. Any of these materials can be made by coextruding a first thermoplastic material with a second thermoplastic material. The first thermoplastic material forms the core B and the second thermoplastic material forms the outer layers A and C.

All these honeycomb cores are made from sheet material, and the symmetric three-layer or five-layer sheets according to embodiments of the present invention can be used to make these honeycomb cores.

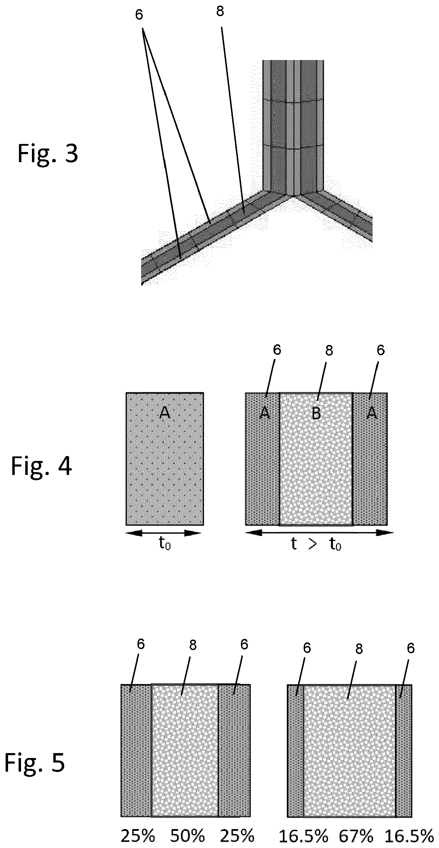

Figures 2 and 3 show a honeycomb core made with a sheet material to form polygonal cells typically with four or six cell walls, the sheet material being symmetric three-layer or five-layer sheet material according to embodiments of the present invention. Honeycomb cores of the present invention can have cell walls 2, 6 + 8 that have a single thickness. Alternatively, one cell wall 4 of the honeycomb core can have two layers of sheet material.

Embodiments of the present invention provide cellular structures such as folded honeycomb structures. In particular, the present invention concerns an improved thermoplastic honeycomb structure as defined in claims 1 to 12.

An advantage of the folded honeycomb core is that it can be made by a moulding technique such as vacuum forming or rotational vacuum forming. Thermoforming can also be used. These can be used as a step in the making of a honeycomb core allowing a continuous and cost-efficient production.

The honeycomb products in accordance with embodiments of the present invention have improved compression resistance allowing for a further reduction of material usage.

Embodiments of the present invention provide a honeycomb which is not made by fanning out nor expanding from a stack of sheets e.g. glued together.

Embodiments of the present invention provide a honeycomb, formed from a plurality of polygonal cells arranged in an array, wherein: each polygonal cell has lateral cell walls extending between vertices of each polygonal cell, each polygonal cell being bounded on two sides by covering-layer planes, the lateral cell walls (sometimes referred to as side walls of the cell) of each polygonal cell being composed of sheet material.

Embodiments of the present invention provide a honeycomb core with rectangular, square or hexagonal cells, whereby cell walls of such honeycomb cores are composed of at least two materials. In some embodiments, sheet material for making the honeycomb cores is a symmetric three- (or five-) layer ABA (or CABAC e.g. with bonding layers) construction. Preferably, the B layer has a lower density compared with the A or C layers. The outer A-layers are preferably smooth. The smoothness of surfaces can be measured by Micro CT (micro-computed tomography) as well as laser-profile sensors.

The symmetric three- or five-layer construction is preferably made by film extrusion, e.g. more preferably by co-extrusion of the layers. Parameters which can affect the performance of the symmetric three- or five-layer ABA or CABAC construction can include providing a higher strength and stiffness in the outer A and/or C layers. A lower density in the inner layer B compared to the outer layers A or C provides significant mechanical improvement in performance of the honeycomb core made from the symmetric three- or five-layer ABA or CABAC construction. This, preferably extruded or co-extruded, inner B layer should preferably have a lower density of, for example, 30% to 90% (best 50-70%) of the density of the outer layer A, C. The lower density can be provided by low density components such as the layer B being made by physical foaming (e.g. frothing) or chemical foaming or by adding low density components such as hollow glass spheres or other low density fillers. The polymer density of the outer layers can vary from 0.9 to 1.5 or even 2 kg/dm³, dependent on the type of polymer and the filler used in the polymer. The lower density of 1.1 kg/dm³ can be a lower density for an inner B layer if the polymer of the outer layer A or C has a density of 1.6 kg/dm³. If the polymer of the outer layer A or C has a density of 1 kg/dm³, then the inner layer B should have at least 0.9 kg/dm³ to obtain an advantage on the weight specific bending and buckling performance of the cell walls.

Preferably, the symmetric three- or five-layer ABA (or CABAC) sheet material is fed directly into a moulding process of which rotation vacuum forming is one example.

An alternative is to make the symmetric three- or five-layer construction by cast film extrusion and the three- or five-layer construction can be fed directly onto a vacuum forming roller for the production of 3D structures in the extruded/cast sheet.

For a good panel surface quality, the cell size should stay small, thus the co-extruded wall thickness is preferably less than 1 mm, and at least 0.1 mm to lead to significant cell wall thickness increase.

To reach a reasonable low density, the thickness of the central (or core) layer or inner layers in the co-extruded cell walls is at least 1/3 or, preferably, at least 1/2, most preferably 67% to 90%, of the total cell wall thickness. The optimal weight specific cell wall buckling strength is also a function of the density ratio between the different layers. For optimal performance, the weight fraction of the central (or core) layer or inner layers should be between one third (1/3) to one half (1/2) of the total cell wall weight. A large ratio between the density of the material in the outer layers and the density of the material in the central (or core) layer leads to very thin outer layers and a large percentage of the thickness of the inner layer. Larger density ratios are preferred, but difficult to reach in co-extrusion.

Preferably, all three A, B, C layers should be based on the same thermoplastic polymer or compatible polymer to ease recycling and the refeeding of the edge trim.

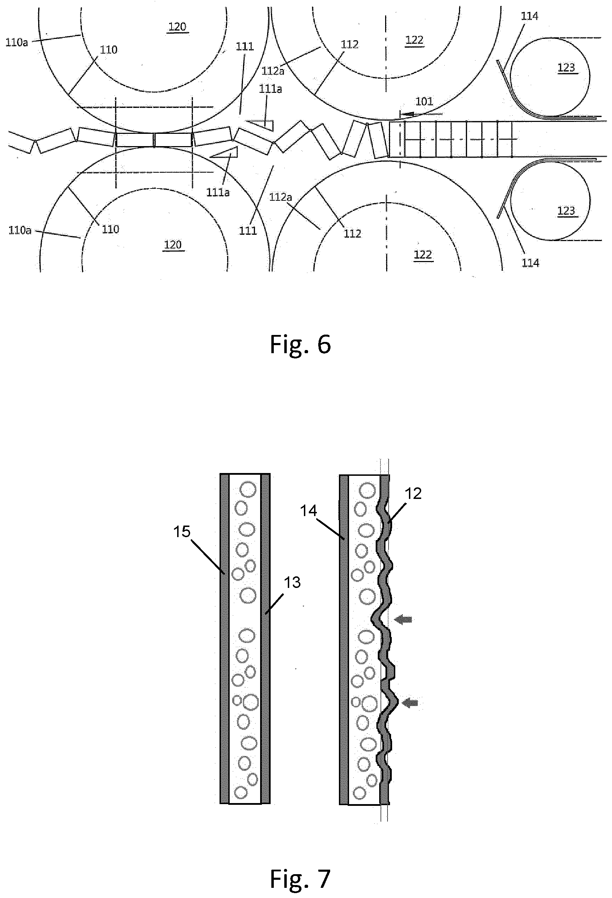

An additional element is that both outer A and C layers should be flat and smooth. Foaming of the inner layer B or a low-density filler in the inner layer can lead to an uneven surface of the outer A or C layers. Micro CT or laser-profile sensors can be used to measure the out-of-plane unevenness, compared to the ideal plane of the cell wall. The unevenness of the skin layer should be smaller than the thickness of the skin layer. Fig. 7 shows on the left side ideal flat skins 13, 15 made of three-layer ABA or five-layer CABAC sheet material in accordance with embodiments of the present invention which form sandwich cell walls while on the right it shows a sandwich cell wall with one skin flat 14 and one skin 12 with an out-of-plane unevenness which is at two points (see arrows) larger than the skin layer thickness. Such a skin layer would buckle under in-plane compression loads much earlier than a flat skins.

For the compression performance of cell walls and, thus, for the compression strength of the honeycomb core, it is advantageous that at least one or both of the outer A, C layers are flat and have only smooth thickness variations.

A first flat and smooth outer A or C layer can be achieved by contact with an outer smooth surface of the rotational vacuum forming roller. The foaming process and/or the fillers can lead however to local density variation in the inner B layer and this can lead to thickness variations of the inner B layer resulting in an uneven second outer A or C layer.

For a good compression performance of the honeycomb core and buckling performance of the sandwich cell walls, it has been found that it is also possible and useful that the second outer layer is flat and smooth.

This can be achieved by a chill roller which cools the other side of the co-extruded film and flattens the other outer layer prior to the still hot co-extruded film being deformed in the vacuum forming roller.

There are also other options for making the outer A and C layers flat, like calendaring of the co-extruded film after or during the foaming process and prior to rotational vacuum forming or other vacuum forming.

In the three-layer ABA cell walls, the B layer should have a lower density. A glass fiber (2.5 kg/dm³) reinforcement of a thermoplastic polymer leads typically to a higher density. For the other A and C layers, such a reinforcement can be used, but for the inner B layer the low density is the more important parameter. This lower density allows to make the inner layer thicker without adding much weight and this larger total thickness brings the performance advantage. The density ratio between the inner layer and the other layers is an important parameter of this invention. This leads to a larger cell wall thickness. The thickness of the cell wall goes with the power of 3 into the buckling resistance of the other A layer the sandwich cell wall. For the central B layer, fillers like hollow glass spheres which allow to reduce the polymer density can be used. Hence, fibers and fillers of different kind can be useful for the other A, C layers, but co-extrusion and thermoplastic forming by vacuum or with a plug (i.e. plug assistant thermoforming) or with a counter roller or between two matching molds of the ABA cell walls is preferable.

Referring to Figures 1 to 6, honeycomb cores are disclosed, i.e. folded honeycomb cores whereby symmetric multilayer (three-layer ABA or five-layer CABAC) sheet material of embodiments of the present invention can be used.

Figures 2 and 3 show a section of a flat sheet or web made of a plastically deformable material. This flat sheet can be provided by a symmetric three-layer ABA or five-layer CABAC sheet material in accordance with any of the embodiments of the present invention. The three-layer ABA or five-layer CABAC sheet material in accordance with any of the embodiments of the present invention is a plastically deformable material and made of a thermoplastic polymeric material, or a fiber composite material, or similar. The three-layer ABA or five-layer CABAC sheet material in accordance with embodiments of the present invention is composed of a thermoplastic polymer and/or a thermoplastic elastomeric polymer, or a thermoplastic polymer selected from a group consisting of polyolefins, in particular polyethylene or polypropylene, polyesters, in particular polyethylene terephthalate, polytrimethylene terephthalate, polybutylene terephthalate or polyetylene- 1,2-furandicaboxylate, polyamides, in particular polyamide 6 or polyamide 6,6, polycarbonates, polyetherketones, polyetheretherketones, polyetherketoneketones polyethers, polyetheresters, polyphenylene sulfides, polyetherimides, copolymers and mixtures thereof with or without filler, reinforcements and/or air or gas inclusions. The inner core of the symmetric three-layer or five-layer thermoplastic co-extruded sheet materials can be a foam, such as a mechanical foam or a chemical foam.

The flat web or sheet (three-layer ABA or five-layer CABAC) has plastic deformations 101, 102 formed therein, mainly perpendicular to the material web. In the regions 101 and 102, the material is deformed, e.g. polygonally, for example trapezoidally, or sinusoidally, or arcuately or the like, from the plane of the web. The deformations form ridges 108 and valleys 109, whereby each of these is not continuous. For example, the ridges are composed of a linear series of deformed sections 101, 102 e.g. polygonal, for example trapezoidal, or sinusoidal, or arcuate sections or the like. Preferably, the ridges have a top surface 115 that may be initially (e.g. as formed) parallel to the plane of the web of material. In a method to produce the folded honeycomb core, two top surfaces 115 will abut each other when the 3D structures are rotated (also called "folded") to form the honeycomb cells, thus also forming a cell wall with double sheet thickness.

The production direction is preferably as shown in Fig.1. However, a direction perpendicular thereto (parallel to the axes 105 and 106) could be used as well.

The deformed sections 101 and 102 are preferably formed inclined, i.e. rotated, towards each other around the axis 105 and/or 106, to form additionally u- or v-shaped connection areas 103 and 104. The connecting areas or connecting sections 103 and 104 separate the deformed sections (ridge sections) 101,102, e.g. the polygonal, for example trapezoidal, or sinusoidal, or arcuate sections or the like in one row of deformed sections 101, 102. One connecting section 103, 104 is placed between two sections 101, 102 and connecting sections 103 alternate along the row of sections 101, 102 with connecting sections 104. The connecting areas 103, 104 form cross-valleys, i.e. perpendicular to the valleys 109. Adjacent cross-valleys are on opposite sides of the web material. The rotation of the sections 101, 102 to bring them into the initial position of Fig. 1, is preferably performed at the same time as the deformations are placed into the web of material. The web material is stretched at the transitions between the sections 101 and 102 to form the areas 103 and 104, which are substantially perpendicular to the outer surfaces 115 of the sections 101 and 102. The angle between surfaces 103, 104 on different ridge sections 101 and 102, allows a part of a tool to enter and, thus, to form these sections. The width direction of the material web elongates preferably in the direction of the axis 105 and 106 while the endless length direction of the material web is continuous along the production direction at the line 107.

The deformation of the web or sheet material (three-layer ABA or five-layer CABAC as used in embodiments of the present invention) in the regions 101 and 102 serves the purpose of the formation of three-dimensional shapes, which form the walls of cell halves in the folded end product. The cells thus formed are structural and load bearing elements of the folded honeycomb core, the cell walls extending transversely to the longitudinal direction of the folded end product. The use of the three-layer ABA sheet material or five-layer CABAC sheet material in embodiments of the present invention improves the mechanical performance. The cells formed by folding are preferably cylindrical in cross section, the axis of the cylinder extending transversely with respect to the longitudinal direction of the folded end product and in thickness direction of the planar honeycomb core finally produced. The basic cross-sectional shape of a cell can be selected as desired, for example circular or polygonal, in particular even-numbered polygonal, for example hexagonal. The final cell shape is determined by the shape of the deformed regions 101, 102 in the original web and how they fold together. As shown in Fig.1, when the web is fully folded, each cell is formed from two half-cells. The cells are arranged in rows. Each final cell is formed by the bottom and sides of two longitudinally adjacent (in the sheet or web material) valley sections 109. The half cells are joined preferably together across touching top surfaces 115 from two longitudinally adjacent (in the web material) ridge sections 108. Accordingly, a folded honeycomb is provided, formed from a plurality of cells arranged in rows, with the following features: all made from three-layer ABA sheet material or from five-layer CABAC sheet material as used in embodiments of the present invention, the cells having lateral cell walls which adjoin one another in the form of a ring and are bounded toward two opening sides of the cell by covering-layer planes, whereby the cells are each bridged or closed completely in one or other of the covering-layer planes. The folded honeycomb can be formed from a substantially uncut flat web, i.e. a continuous sheet that is not porous such as a three-layer ABA or five-layer CABAC sheet material as used in embodiments of the present invention. The sheet is extruded, more preferably co-extruded. Plastic deformation of the sheet forms 3D-structures. Hence, the folded honeycomb contains a plurality of 3D-structures, e.g. polygonally, sinusoidally or arcuately shaped sections (101 and 102) formed by plastic deformation and connecting sections (103 and 104) in the covering-layer planes produced by the plastic deformation. At least a part of the cell walls are preferably wholly or partly permanently connected to one another, e.g. by glue or adhesive or welding.

The final honeycomb structure is a planar product whereby the cells are arranged perpendicular to the plane of the product and across the thickness. Cells on alternating sides of the planar structure are closed by the connecting sections 103, 104. All the cells can be closed by the application of one or more covering layers, e.g. by laminating the planar product of the present invention with covering sheets. The present invention includes within its scope the possibility that the sections (3D-structures) 101, 102, e.g. trapezoidal, sinusoidal or circular structures in the web which form the cell walls, are not fully vertical and/or not contacting each other after the folding of the deformed material web, thus forming a structure which is at least in one direction open in-plane.

Returning to Fig. 1, the production method which can be used to produce the folded honeycomb core of the present invention continues by rotating the sections 101 and 102 further so that the surfaces 115 from adjacent ridge sections 108 are adjacent to each other or preferably touch each other. Fig. 1 shows a further intermediate state in the production of the folded honeycomb. The narrowing of the plastically deformed material web occurs by the folding operation of the material web about the folding lines or axis 105 and 106. The u- or v-shaped connecting sections 103 and 104 are unfolded and come to lie flat in the plane perpendicular to the cell walls. The sections 103 and 104 are introduced to avoid substantial deformation of the 3D-structures of the material web, e.g. the polygonally, for example trapezoidally, or sinusoidally, or arcuately deformed sections 101 or 102, or the like.

Fig. 1 also shows the material almost fully folded to form two rows of hexagonal honeycomb cells. As a result of being folded together, the adjacent sections 103 (respectively 104) abut against one another as shown in Fig.1. Each honeycomb cell is then closed by a connecting section 103 or 104 on at least one side (bottom or top side) of each honeycomb cell. That is the cells have on one end a closed surface formed by the connecting sections 103, 104. The surfaces 115 can be connected to one another, e.g. with glue or adhesive or by welding such as ultrasonic welding. However, this connection is not an essential requirement of the present invention.

The above process relies on folding the deformed web material (that is three-layer ABA or five-layer CABAC sheet material as used in embodiments of the present invention) whereby the way the sections (3D-structures) 101, 102 and the connecting sections 103, 104 are formed is done to ease the folding and rotation process. Fig. 1 also shows a side view of the formed material web prior to a folding operation. To ease the folding operation, the plastically deformed material web has the axes 105 and 106 (around which the material regions 101 and 102 rotate during folding) preferably positioned out-of-plane with a positive value of the dimension "x" (for further details we refer to WO2006/053407, especially its figure 7). The dimension x is selected so that a section crossing a valley (formed by connecting section) 103, or a cross-valley (formed by connecting section) 104 on the upper surface of the material has its lowest apex joining point on the axis 106 of the valley higher than the apex joining point on the axis 105 of the cross-valley which is on the lower surface of the web. A longitudinal force along the production direction will act through the axes 105 and 106 and, by so doing, will exert a bending moment about the axes 105, 106. This allows that the formed material web can be folded up by simple compression in the production direction.

The production can be run continuously. Preferably, pairs of rollers are used to push the material web or sheet together in production direction. However, rotating tools, oscillating translating tools or guiding profiles can be used to help or ensure the folding up of the web or sheet. Accordingly, an independent aspect of the present invention is to form a folded honeycomb by means of a non-cutting, continuous, static plastic optionally non-rotational or plastic rotation forming of a material web. The plastic deformation can be carried out, for example, by means of a rotation vacuum thermoforming or rotation thermoforming without vacuum or by means of static molding process. The sheet or web material can be provided as a stack of films or from a roll or via a film from the die of an extruder. The moulds have inter-engaging profiles, e.g. on each of two mould surfaces or on rolls running against each other.

The surface of the mould or roller, e.g. vacuum roller for the thermoforming of the material sheet or web has a relatively complex geometry to enable that in the formed material web the sections 101 and 102 are not only formed but also preferably only slightly rotated (e.g. 10 to 30°) towards each other. This allows the formation of the v-shaped areas 103 and 104 and ensures a shape configured to be vacuum thermoformable and airtight of the material web that can be folded by further rotation (e.g. of about 80° to 60°) of the areas 101 and 102 around the axes 105 and 106.

Fig. 6 shows a side view of the material sheet or web during the folding operation and a cross section of a folding equipment which may used to produce the folded honeycomb core of the present invention. The speed of the not yet folded material sheet or web relative to the folded honeycomb core, i.e. the material take-up factor, for a half-closed thermoplastic honeycomb core open with a thickness of 8 mm and a cell size cross-section of 6.4 mm. can be 2.696 in arbitrary speed units; this reduces to 2.5 within the first set of rollers 120 and then further to 1 in the second set of rollers 122. The final speed is that of the throughput of the folded honeycomb planar structure.

The folding unit contains a pair of feeding rollers 120, e.g. rubber coated on their outer surface 110, with grooves 110a within the outer surfaces of the feeding rollers 120, which feeding rollers are placed upstream of a guiding grid 111 to keep the material web in-plane during folding and a second set or pair of pushing or counter rollers 122, e.g. rubber coated on their outer surface 112, having similar grooves 112a to apply a counter pressure, which ensures a sufficient in-plane compression force to enable the folding. The compression force between the lower feeding roller and upper feeding roller 120 may reduce the inclination and rotation of the areas 101 and 102 towards each other by elastic deformation, but in the section between the feeding rollers 120 and the pushing counter rollers 122, the material web will move back into its thermoformed shape, preferably but not necessarily without the help of tools or guides 11 1a, as it continues to fold up. A gating and/or braking mechanism initially retards or stops the web. It opens at a force that is generated only by the material web in the fully folded stage. It continues to apply a friction force in its open state as the folded web is formed.

The folded honeycomb is preferably directly further processed to a lightweight sandwich panel by lamination or direct extrusion of covering sheets or films 114 onto both sides of the honeycomb core, e.g. with lamination rollers or belts 123. The equipment provided by the present invention can include a deforming and folding unit as well as a core gluing or welding unit and a lamination unit.

The web sheet material (three-layer ABA or five-layer CABAC used in embodiments of the present invention) can be provided either directly from a suitable forming equipment such as an extruder or co-extruder from a roll of web material or stack of sheet material (three-layer ABA or five-layer CABAC used in embodiments of the present invention). Optionally, the web or sheet of material is maintained at a temperature or heated up to moulding or forming temperatures. The regions (3D structures) 101, 102 are formed in the web or sheet material by any suitable process, e.g. vacuum forming or hot rolling. Instead of using vacuum drawing, opposed shaped pressure plates can be used to exert pressure and heat onto malleable (e.g. hot) thermoplastic sheet (three-layer ABA or five-layer CABAC used inembodiments of the present invention) to form the half-cells. This allows perforated materials to be used, which is not possible if vacuum is applied. The perforations of the perforated materials can be produced at the same time as applying the pressure or can be made into the sheet (three-layer ABA or five-layer CABAC used in embodiments of the present invention) before the pressure molding step. Making the honeycomb core from perforated sheets (three-layer ABA or five-layer CABAC used in embodiments of the present invention) can be good for noise attenuation. Pressure moulding can also be used.

The web material with the 3D-structures formed is folded together to form the honeycomb core. Optionally, a lamination of one or more cover layers or other layers is performed either in-line or off-line. Postforming operations can be performed such as cutting to length or forming the honeycomb material into shapes, e.g. by pressing or fixing the honeycomb material to another, e.g. to a metal part.

The present invention includes folded honeycombs where the connecting areas or sections preheated 103 and preheated 104 are removed later (e.g. during lamination of nonwoven covering layers), e.g. by cutting or melting away so that all cells are opened on both sides, thus leading to a 3D-formable sandwich preform.

## Claims

1. A folded honeycomb core, formed from a plurality of polygonal cells arranged in an array, wherein: each polygonal cell has lateral cell walls, each polygonal cell being bounded on two sides by covering-layer planes, the lateral cell walls of each polygonal cell forming a polygonal ring, the lateral cell walls being composed of a sheet material, the sheet material being a symmetric three layer or five layer thermoplastic co-extruded sheet material having a central (or core) layer or inner layers and outer layers, the central (or core) layer or inner layers having a density of 30% to 90%, preferably, 50-70% of the density of the outer layers.

2. The honeycomb core according to claim 1, wherein the central (or core) layer or the inner layers is/are made by physical foaming or chemical foaming or by being composed of low density components.

3. The honeycomb core according to claim 2, wherein low density components comprise hollow glass particles.

4. The honeycomb core according to any previous claim, wherein a polymer density of the outer layers is in the range of 0.9 to 1.5 or 0.9 to 2 kg/dm³.

5. The honeycomb core according to any previous claim, wherein the central (or core) layer or inner layers has/have density of 1.1 kg/dm³ when the outer layers have density of 1.6 kg/dm³.

6. The honeycomb core according to claim 5, wherein if the outer layer has a density of 1 kg/dm³, then the inner core has a density of equal or less than 0.9 kg/dm³.

7. The honeycomb core according to any of the claims 2 to 6, wherein the three-layer or five-layer co-extruded wall thickness is less than or equal to 1 mm and at least 0.1 mm .

8. The honeycomb core according to claim 7, wherein the central (or core) layer or inner layers of the co-extruded wall has/have a thickness of preferably at least 1/3, more preferably 67% to 90%, of the total cell wall thickness or preferably at least 1/2 of the total cell wall thickness.

9. The honeycomb core according to any of the previous claims, wherein the outer layers are flat and smooth without an out-of-plane unevenness, compared to the ideal plane of a cell wall, wherein the unevenness of the outer layers is smaller than the thickness of the outer layers.

10. The honeycomb core according to any of the previous claims, wherein the symmetric three layer or five layer thermoplastic co- extruded sheet materials are selected from a thermoplastic polymer and/or a thermoplastic elastomeric polymer, or a thermoplastic polymer selected from a group consisting of polyolefins, in particular polyethylene or polypropylene, polyesters, in particular polyethylene terephthalate, polytrimethylene terephthalate, polybutylene terephthalate or polyetylene- 1,2-furandicaboxylate, polyamides, in particular polyamide 6 or polyamide 6,6, polycarbonates, polyetherketones, polyetheretherketones, polyetherketoneketones polyethers, polyetheresters, polyphenylene sulfides, polyetherimides, copolymers and mixtures thereof, with or without filler, reinforcements and/or air or gas inclusions.

11. The honeycomb core according to claim 10, wherein the central (or core) layer or the inner layers and the outer layers are composed of the same thermoplastic polymer.

12. The honeycomb core according to any of the previous claims, wherein the outer layers are composed of a structural thermoplastic material or the outer layers are composed of a solid thermoplastic material.

## Patentansprüche

1. Gefalteter Wabenkern, der aus einer Vielzahl von vieleckigen Zellen gebildet ist, die in einer Anordnung angeordnet sind, wobei: jede vieleckige Zelle seitliche Zellwände aufweist, wobei jede vieleckige Zelle an zwei Seiten durch Deckschichtebenen begrenzt ist, wobei die seitlichen Zellwände jeder vieleckigen Zelle einen vieleckigen Ring bilden, wobei die seitlichen Zellwände aus einem bahnförmigen Material bestehen, wobei das bahnförmige Material ein symmetrisches, dreischichtige oder fünfschichtiges thermoplastisches, coextrudiertes, bahnförmiges Material mit einer zentralen (oder Kern-)Schicht oder inneren Schichten und äußeren Schichten ist, wobei die zentrale (oder Kern-)Schicht oder innere Schichten eine Dichte von 30 % bis 90 %, bevorzugt 50 - 70 % der Dichte der äußeren Schichten aufweist / aufweisen.

2. Wabenkern gemäß Anspruch 1, wobei die zentrale (oder Kern- )Schicht oder die inneren Schichten durch physikalisches Schäumen oder chemisches Schäumen oder durch Zusammensetzen von Bestandteilen niedriger Dichte hergestellt ist/sind.

3. Wabenkern gemäß Anspruch 2, wobei die Bestandteile niedriger Dichte hohle Glaspartikel umfassen.

4. Wabenkern gemäß irgendeinem der voranstehenden Ansprüche, wobei eine Polymerdichte der äußeren Schichten im Bereich von 0,9 bis 1,5 oder 0,9 bis 2 kg/dm³ liegt.

5. Wabenkern gemäß irgendeinem der voranstehenden Ansprüche, wobei die zentrale (oder Kern-)Schicht oder inneren Schichten eine Dichte von 1,1 kg/dm³ aufweist/aufweisen, wenn die äußeren Schichten eine Dichte von 1,6 kg/dm³ aufweisen.

6. Wabenkern gemäß Anspruch 5, wobei der innere Kern eine Dichte von gleich oder weniger als 0,9 kg/dm³ aufweist, wenn die äußere Schicht eine Dichte von 1 kg/dm³ aufweist.

7. Wabenkern gemäß irgendeinem der Ansprüche 2 bis 6, wobei die dreischichtige oder die fünfschichtige, coextrudierte Wanddicke geringer als oder gleich 1 mm und wenigstens 0,1 mm beträgt.

8. Wabenkern gemäß Anspruch 7, wobei die zentrale (oder Kern- )Schicht oder die inneren Schichten der coextrudierten Wand eine Dicke von bevorzugt wenigstens 1/3, weiter bevorzugt von 67 % bis 90 % der gesamten Zellwanddicke oder bevorzugt wenigstens 1/2 der gesamten Zellwanddicke aufweist bzw. aufweisen.

9. Wabenkern gemäß irgendeinem der voranstehenden Ansprüche, wobei die äußeren Schichten im Vergleich zur idealen Ebene einer Zellwand, flach und glatt, ohne Unebenheiten außerhalb der Ebene sind,
wobei die Unebenheit der äußeren Schichten kleiner ist als die Dicke der äußeren Schichten.

10. Wabenkern gemäß irgendeinem der voranstehenden Ansprüche, wobei die symmetrischen, dreischichtigen oder fünfschichtigen, thermoplastischen, coextrudierten, bahnförmigen Materialien aus einem thermoplastischen Polymer und/oder einem thermoplastischen Elastomerpolymer oder einem thermoplastischen Polymer ausgewählt sind, das aus einer Gruppe ausgewählt ist, gebildet aus Polyolefinen, insbesondere Polyethylen oder Polypropylen, Polyestern, insbesondere Polyethylen-Terephthalat, Polytrimethylen-Terephthalat, Polybutylen-Terephthalat oder Polyethylen, 1,2-Furandicaboxylat, Polyamide, insbesondere Polyamid 6 oder Polyamid 6,6-Polycarbonaten, Polyetherketonen, Polyetheretherketonen, Polyetherketoneketon-Polyethern, Polyetherestern, Polyphenylen-Sulfiden, Polyetherimiden, Copolymeren und Mischungen davon, mit oder ohne Füllstoff, Verstärkungen und/oder Luft- oder Gaseinschlüssen.

11. Wabenkern gemäß Anspruch 10, wobei die zentrale (oder Kern- )Schicht oder die inneren Schichten und die äußeren Schichten aus demselben thermoplastischen Polymer bestehen.

12. Wabenkern gemäß irgendeinem der voranstehenden Ansprüche, wobei die äußeren Schichten aus einem strukturellen thermoplastischen Material bestehen oder die äußeren Schichten aus einem festen, thermoplastischen Material bestehen.

## Revendications

1. Âme en nid d'abeilles plié, formée à partir d'une pluralité de cellules polygonales agencées en un réseau, dans laquelle :
chaque cellule polygonale présente des parois cellulaires latérales, chaque cellule polygonale étant délimitée sur deux côtés par des plans de couches de recouvrement, les parois cellulaires latérales de chaque cellule polygonale formant un anneau polygonal, les parois cellulaires latérales étant composées d'un matériau en feuille, le matériau en feuille étant un matériau en feuille thermoplastique coextrudé à trois couches ou cinq couches symétriques présentant une couche centrale (ou âme) ou des couches intérieures et des couches extérieures, la couche centrale (ou âme) ou les couches intérieures présentant une densité de 30 % à 90 %, de préférence, de 50 à 70 % de la densité des couches extérieures.

2. Âme en nid d'abeilles selon la revendication 1, dans laquelle la couche centrale (ou âme) ou les couches intérieures est/sont faite(s) par moussage physique ou moussage chimique ou en étant composées de composants à faible densité.

3. Âme en nid d'abeilles selon la revendication 2, dans laquelle des composants à faible densité comprennent des particules de verre creux.

4. Âme en nid d'abeilles selon l'une quelconque des revendications précédentes, dans laquelle une densité de polymère des couches extérieures est comprise dans la plage de 0,9 à 1,5 ou de 0,9 à 2 kg/dm³.

5. Âme en nid d'abeilles selon l'une quelconque des revendications précédentes, dans laquelle la couche centrale (ou âme) ou les couches intérieures présente(nt) une densité de 1,1 kg/dm³ lorsque les couches extérieures présentent une densité de 1,6 kg/dm³.

6. Âme en nid d'abeilles selon la revendication 5, dans laquelle si la couche extérieure présente une densité de 1 kg/dm³, alors l'âme intérieure présente une densité égale ou inférieure à 0,9 kg/dm³.

7. Âme en nid d'abeilles selon l'une quelconque des revendications 2 à 6, dans laquelle l'épaisseur de paroi coextrudée à trois couches ou à cinq couches est inférieure ou égale à 1 mm et au moins 0,1 mm.

8. Âme en nid d'abeilles selon la revendication 7, dans laquelle la couche centrale (ou âme) ou les couches intérieures de la paroi coextrudée présente/nt une épaisseur de préférence d'au moins 1/3, plus préférablement de 67 % à 90 %, de l'épaisseur de paroi cellulaire totale ou de préférence d'au moins 1/2 de l'épaisseur de paroi cellulaire totale.

9. Âme en nid d'abeilles selon une quelconque des revendications précédentes, dans laquelle les couches extérieures sont plates et lisses sans irrégularité en dehors du plan, par rapport au plan idéal d'une paroi cellulaire, dans laquelle l'irrégularité des couches extérieures est inférieure à l'épaisseur des couches extérieures.

10. Âme en nid d'abeilles selon une quelconque des revendications précédentes, dans laquelle les matériaux en feuille thermoplastique coextrudés à trois couches ou à cinq couches symétriques sont sélectionnés parmi un polymère thermoplastique et/ou un polymère élastomère thermoplastique, ou un polymère thermoplastique sélectionné dans un groupe constitué de polyoléfines, en particulier polyéthylène ou polypropylène, polyesters, en particulier polyéthylène téréphtalate, polytriméthylène téréphtalate, polybutylène téréphtalate ou polyéthylène-1,2-furandicaboxylate, polyamides, en particulier polyamide 6 ou polyamide 6,6, polycarbonates, polyéthercétones, polyétheréthercétones, polyéthercétonecétones polyéthers, polyétheresters, polyphénylène sulfides, polyétherimides, des copolymères et des mélanges de ceux-ci, avec ou sans charge, renforts et/ou inclusions d'air ou de gaz.

11. Âme en nid d'abeilles selon la revendication 10, dans laquelle la couche centrale (ou âme) ou les couches intérieures et les couches extérieures est/sont composée(s) du même polymère thermoplastique.

12. Âme en nid d'abeilles selon l'une quelconque des revendications précédentes, dans laquelle les couches extérieures sont composées d'un matériau thermoplastique structurel ou les couches extérieures sont composées d'un matériau thermoplastique solide.
